(19) Europäisches Patentamt
European Patent Office
Office européen des brevets

(11) **EP 2 947 882 A1**

(12) **EUROPEAN PATENT APPLICATION**

(43) Date of publication:
**25.11.2015 Bulletin 2015/48**

(51) Int Cl.:
**H04N 19/33** *(2014.01)*

(21) Application number: **14305736.2**

(22) Date of filing: **20.05.2014**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME** | • **Leleannec, Fabrice<br>35576 CESSON SEVIGNE (FR)**<br>• **Olivier, Yannick<br>35576 CESSON SEVIGNE (FR)**<br>• **Touze, David<br>35576 CESSON SEVIGNE (FR)** |
| (71) Applicant: **Thomson Licensing<br>92130 Issy-les-Moulineaux (FR)** | (74) Representative: **Huchet, Anne et al<br>Technicolor<br>1, rue Jeanne d'Arc<br>92443 Issy-les-Moulineaux Cedex (FR)** |
| (72) Inventors:<br>• **Lasserre, Sebastien<br>35576 CESSON SEVIGNE (FR)** | |

(54) **Method and device for scalable encoding of a high dynamic range frame and/or decoding a bitstream representing such a frame**

(57)    The present disclosure generally relates to a method and device for encoding a frame. The method and the device comprises a processor configured for:
- encoding (12) a backlight frame determined (11) from the frame;
- obtaining (13) at least one component of a residual frame by dividing each component of the frame by a decoded version of the backlight frame;
- mapping each component ($Y_{Res}$) of the residual frame (Res) such that the mapping of each pixel ($Y_{Res,p}$) of a component ($Y_{Res}$) of the residual frame Res depends on the pixel value (Balp) of either the backlight frame (Bal) or a decoded version of the backlight frame $(\widehat{Bal})$, associated with this pixel (**p**); and
- encoding (18) the mapped residual frame.
    The disclosure further relates to a decoding method and device.

**Fig. 1**

**Description**

**1. Field.**

The present disclosure generally relates to frame encoding and decoding. In particular, the technical field of the present disclosure is related to encoding/decoding of a frame whose pixels values belong to a high-dynamic range.

**2. Background.**

The present section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Low-Dynamic-Range frames (LDR frames) are frames whose luminance values are represented with a limited number of bits (most often 8 or 10). This limited representation does not allow correct rendering of small signal variations, in particular in dark and bright luminance ranges. In high-dynamic range frames (HDR frames), the signal representation is extended in order to maintain a high accuracy of the signal over its entire range. In HDR frames, pixel values are usually represented in floating-point format (either 32-bit or 16-bit for each component, namely float or half-float), the most popular format being openEXR half-float format (16-bit per RGB component, i.e. 48 bits per pixel) or in integers with a long representation, typically at least 16 bits.

A typical approach for encoding an HDR frame is to reduce the dynamic range of the frame in order to encode the frame by means of a legacy encoding scheme (initially configured to encode LDR frames).

According to a well-known approach, a backlight frame is determined from the luminance component of the input HDR frame. A residual frame is then obtained by dividing the input HDR frame by the backlight frame and both the backlight frame and the residual frame are encoded by a legacy encoder such as H.264/AVC (("Advanced video coding for generic audiovisual Services", SERIES H: AUDIOVISUAL AND MULTIMEDIA SYSTEMS, Recommendation ITU-T H.264, Telecommunication Standardization Sector of ITU, January 2012).) or HEVC ("High Efficiency Video Coding", SERIES H: AUDIOVISUAL AND MULTIMEDIA SYSTEMS, Recommendation ITU-T H.265, Telecommunication Standardization Sector of ITU, April 2013).

The capability of compression depends strongly on the temporal correlation between frames and the spatial smoothness of each frame. Actually, video encoders use temporal and intra-frame prediction as a very efficient tool to compress video data.

In broadcast and OTT, the compression capability of the encoder is pushed at its maximum due to adverse bandwidth restriction. That's why, all tools which could improve the compression performance of the HDR encoding scheme described above, while keeping the complexity at a reasonable level, is welcomed.

It is the purpose of the disclosure to propose such a tool for the HDR compression using a backlight.

**3. Summary.**

In light of the foregoing, aspects of the present disclosure are directed to creating and maintaining semantic relationships between data objects on a computer system. The following presents a simplified summary of the disclosure in order to provide a basic understanding of some aspects of the disclosure. This summary is not an extensive overview of the disclosure. It is not intended to identify key or critical elements of the disclosure. The following summary merely presents some aspects of the disclosure in a simplified form as a prelude to the more detailed description provided below.

The disclosure sets out to remedy some of the drawbacks of the prior art with a method for encoding a frame characterized in that it comprises a processor configured for:

- encoding a backlight frame determined from the frame;
- obtaining at least one component of a residual frame by dividing each component of the frame by a decoded version of the backlight frame;
- mapping each component of the residual frame such that the mapping of each pixel of a component of the residual frame depends on the pixel value of either the backlight frame or a decoded version of the backlight frame associated with this pixel; and
- encoding the mapped residual frame.

According to an embodiment, mapping a component of the residual frame comprises applying a mapping function to the pixel values of this component and multiplying the pixel values of the resulting frame by a scaling factor.

According to an embodiment, the method further comprises obtaining the scaling factor from the pixel value of either the backlight frame or a decoded version of the backlight frame associated with this pixel and a maximum bound of the pixel values of the associated component of the frame to be encoded.

According to an embodiment, the scaling factor is obtained also from a minimum bound of the pixel values of a component of the frame to be encoded.

According to an embodiment, the processor is further configured for encoding an information which represents either a maximum bound or a minimum bound or both of the pixel values of the frame to be encoded.

According to an embodiment, the information is a minimum bound or a maximum bound or both for each pixel of the frame.

The present disclosure further relates to a method for decoding a frame from at least one bitstream representing a backlight frame obtained from the frame and a residual frame calculated by dividing the frame by the backlight frame. The decoding method comprising a processor configured for:

- obtaining a decoded backlight frame by a at least partially decoding of the bitstream;
- obtaining a decoded residual frame by a at least partially decoding of the bitstream; and
- obtaining a decoded frame by multiplying the decoded residual frame by the decoded backlight frame;

the method is characterized in that the processor is further configured, before obtaining the decoded frame, for unmapping each component of the decoded residual frame such that the unmapping of each pixel of a component of the decoded residual frame depends on the pixel value of the decoded backlight frame associated with this pixel.

According to an embodiment, unmapping a component of the decoded residual frame comprises dividing the pixel values of the component by a scaling factor and applying a mapping function to the pixel values of the resulting component.

According to an embodiment, the processor is further configured for obtaining the scaling factor from the pixel value of the decoded backlight frame associated with this pixel and a maximum bound of the pixel values of the associated component of the frame to be decoded.

According to an embodiment, the processor is further configured for obtaining the maximum bound from an information obtained by a at least partially decoding of at least bitstream.

According to other of its aspects, the present disclosure relates to a computer program product, to a processor readable medium and to a non-transitory storage medium.

The specific nature of the disclosure as well as other objects, advantages, features and uses of the disclosure will become evident from the following description of embodiments taken in conjunction with the accompanying drawings.

## 4. Brief Description of Drawings.

In the drawings, an embodiment of the present disclosure is illustrated. It shows:

- **Fig. 1** shows a block diagram of the steps of a method for encoding a frame I in accordance with an embodiment of the disclosure;
- **Fig. 1a** shows a block diagram of the steps of a method for encoding a frame I in accordance with a variant of the embodiment of **Fig. 1;**
- **Fig. 2** shows a block diagram of a step of the method in accordance with an embodiment of the disclosure;
- **Fig. 3** shows a block diagram of a step of the method in accordance with an embodiment of the disclosure;
- **Fig. 4** shows a block diagram of a step of the method in accordance with an embodiment of the disclosure;
- **Fig. 5** shows a block diagram of the steps of a method, in accordance with an embodiment of the disclosure, for decoding a bitstream representing a residual frame calculated by dividing a frame by a backlight frame;
- **Fig. 6** shows an example of an architecture of a device in accordance with an embodiment of the disclosure; and
- **Fig. 7** shows two remote devices communicating over a communication network in accordance with an embodiment of the disclosure;

Similar or same elements are referenced with the same reference numbers.

## 5. Description of Embodiments.

The present disclosure will be described more fully hereinafter with reference to the accompanying figures, in which embodiments of the disclosure are shown. This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the spirit and scope of the disclosure as defined by the claims. Like numbers refer to like elements throughout the description of the figures.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

Although some of the diagrams include arrows on communication paths to show a primary direction of communication, it is to be understood that communication may occur in the opposite direction to the depicted arrows.

Some embodiments are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "one embodiment" or "an embodiment" means that a particular feature, structure, or characteristic described in connection with the embodiment can be included in at least one implementation of the disclosure. The appearances of the phrase "in one embodiment" or "according to an embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

While not explicitly described, the present embodiments and variants may be employed in any combination or sub-combination.

The disclosure is described for encoding/decoding an frame but extends to the encoding/decoding of a sequence of frames (video) because each frame of the sequence is sequentially encoded/decoded as described below.

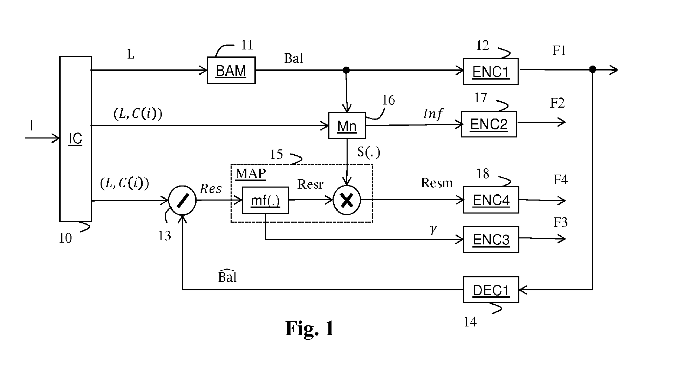

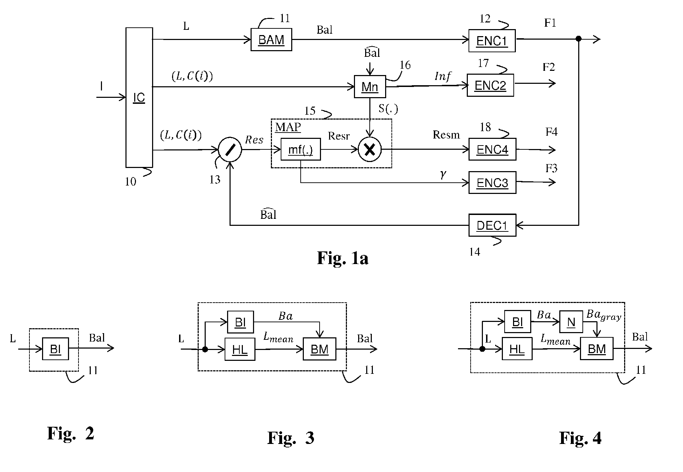

**Fig. 1** shows a block diagram of the steps of a method for encoding a frame I in accordance with an embodiment of the disclosure.

In step 10, a module IC obtains the luminance component L and potentially at least one color component C(i) of the frame I to be encoded.

For example, when the frame I belongs to the color space (X,Y,Z), the luminance component L is obtained by a transform f(.) of the component Y, e.g. L=f(Y). For consistency purpose, a component L or C(i) of the frame I is noted $Y_1$ in the following.

When the frame I belongs to the color space (R,G,B), the luminance component L is obtained, for instance in the 709 gamut, by a linear combination which is given by:

$$L=0.2127.R+0.7152.G+0.0722.B$$

In step 11, a module BAM determines a backlight frame Bal from the luminance component L of the frame I.

According to an embodiment of the step 11, illustrated in **Fig. 2,** a module BI determines a backlight frame Ba as being a weighted linear combination of shape functions $\psi_i$ given by:

$$Ba = \sum_i a_i \psi_i \qquad (1)$$

with $a_i$ being weighting coefficients.

Thus, determining a backlight frame Ba from a luminance component L consists in finding optimal weighting coefficients (and potentially also toptimal shape functions if not known beforehand) in order that the backlight frame Ba fits the luminance component L.

There are many well-known methods to find the weighting coefficients $a_i$. For example, one may use a least mean square method to minimize the mean square error between the backlight frame Ba and the luminance component L.

The disclosure is not limited to any specific method to obtain the backlight frame Ba.

It may be noted that the shape functions may be the true physical response of a display backlight (made of LED's for instance, each shape function then corresponding to the response of one LED) or may be a pure mathematical construction in order to fit the luminance component at best.

According to this embodiment, the backlight frame Bal, output from step 11, is the backlight frame Ba given by equation (1).

According to an embodiment of the step 11, illustrated in **Fig. 3,** a module BM modulates the backlight frame Ba (given by equation (1)) with a mean luminance value $L_{mean}$ of the frame I obtained by the means of a module HL.

According to this embodiment, the backlight frame Bal, output from step 11, is the modulated backlight frame.

According to an embodiment, the module HL is configured to calculate the mean luminance value $L_{mean}$ over the whole luminance component L.

According to an embodiment, the module HL is configured to calculate the mean luminance value $L_{mean}$ by

$$L_{mean} = E\left(L^\beta\right)^{\frac{1}{\beta}}$$

with $\beta$ being a coefficient less than 1 and E(X) the mathematical expectation value (mean) of the luminance component L.

This last embodiment is advantageous because it avoids that the mean luminance value $L_{mean}$ be influenced by a few pixels with extreme high values which usually leads to very annoying temporal mean brightness instability when the frame I belongs to a sequence of frames.

The disclosure is not limited to a specific embodiment for calculating the mean luminance value $L_{mean}$.

According to a variant of this embodiment, illustrated in **Fig. 4,** a module N normalizes the backlight frame Ba (given by equation (1)) by its mean value E(Ba) such that one gets a mid-gray-at-one backlight frame $Ba_{gray}$ for the frame (or for all frames if the frame I belongs to a sequence of frames):

$$Ba_{gray} = \frac{Ba}{E(Ba)}$$

Then, the module BM is configured to modulate the mid-gray-at-one backlight frame $Ba_{gray}$ with the mean luminance value $L_{mean}$ of the frame L, by using the following relation

$$Ba_{mod} \approx cst_{mod}.L_{mean}{}^{\alpha}.Ba_{gray} \quad (2)$$

with $cst_{mod}$ being a modulation coefficient and $\alpha$ being another modulation coefficient less than 1, typically 1/3.

According to this variant, the backlight frame Bal, output from step 11, is the modulated backlight frame $Ba_{mod}$ given by equation (2).

It may be noted that the modulation coefficient $cst_{mod}$ is tuned to get a good looking brightness for the residual frame and highly depends on the process to obtain the backlight frame. For example, $cst_{mod} \approx 1.7$ for a backlight frame obtained by least means squares.

Practically, by linearity, all operations to modulate the backlight frame apply to the backlight coefficients $a_i$ as a correcting factor which transforms the coefficients $a_i$ into new coefficients $\widetilde{a_i}$ such that one gets

$$Ba_{mod} = \sum_i \widetilde{a}_i \psi_i$$

In step 12, the data needed to determine the backlight frame Bal, output from step 11, are encoded by means of an encoder ENC1 and added in a bitstream F1 which may be stored on a local or remote memory and/or transmitted through a communication interface (e.g. to a bus or over a communication network or a broadcast network).

For example, the data to be encoded are limited to the weighting coefficients $a_i$ or $\widetilde{a_i}$ when known non-adaptive shape functions are used, but the shape functions $\psi_i$ may also be a priori unknown and then encoded in the bitstream F1, for instance in a case of a somewhat optimal mathematical construction for better fitting. So, all the weighting coefficients $a_i$ or $\widetilde{a_i}$ (and potentially shape functions $\psi_i$) are encoded in the bitstream F1.

Advantageously, the weighting coefficients $a_i$ or $\widetilde{a_i}$ are quantized before encoded in order to reduce the size of the bitstream F1.

In step 13, at least one component $Y_{Res}$ of a residual frame Res is calculated by dividing each component $Y_I$ of the frame by a decoded version $\widehat{Bal}$ of the backlight frame.

It is advantageous to use the decoded version $\widehat{Bal}$ of the backlight frame to ensure a same backlight frame on both encoder and decoder sides, thus leading to a better precision of a final decoded frame $\hat{I}$.

More precisely, each component $Y_I$ of the frame I, obtained from the module IC, is divided by the decoded version $\widehat{Ba}$ of the backlight frame:

$$Y_{Res} = Y_I / \widehat{Bal}$$

This division is done pixel per pixel.

For example, when the components $Y_I$ (R, G or B) of the frame I are expressed in the color space (R,G,B), the components $Y_{Res}$ ($R_{Res}$, $G_{Res}$ and $B_{Res}$) are obtained as follows:

$$R_{res} = R/\widehat{Bal}, \quad G_{res} = G/\widehat{Bal}, \quad B_{res} = B/\widehat{Bal},$$

For example, when the components $Y_I$ (X, Y or Z) of the frame I are expressed in the color space (Y,Y,Z), the component $Y_{Res}$ ($X_{Res}$, $Y_{Res}$ and $Z_{Res}$) are obtained as follows:

$$X_{res} = X/\widehat{Bal} \quad Y_{res} = Y/\widehat{Bal} \quad Z_{res} = Z/\widehat{Bal}$$

According to an embodiment, in step 14, the decoded version $\widehat{Bal}$ of the backlight frame is obtained by decoding at least partially the bitstream F1 by means of a decoder DEC1.

As explained before, some data needed to obtain the backlight frame, output of step 11, have been encoded (step 12) and then obtained by at least partially decoding the bitstream F1.

Following the example given above, weighting coefficients $\widehat{a_i}$ (and potentially shape functions $\widehat{\psi_i}$) are then obtained and a decoded version $\widehat{Ba}$ of the backlight frame is generated from the weighting coefficients $\widehat{a_i}$ and either some known non-adaptive shape functions or the shape functions $\widehat{\psi_i}$ by:

$$\widehat{Bal} = \sum_i \widehat{a}_i \widehat{\psi}_i$$

In step 15, a module MAP maps each component $Y_{Res}$ of the residual frame Res such that the mapping of each pixel $Y_{Res,p}$ of a component $Y_{Res}$ of the residual frame Res depends on the pixel value $Bal_p$ of the backlight frame Bal associated with this pixel **p** (the pixels $Y_{Res,p}$ and the pixel of the backlight frame have the same spatial position).

According to a variant of the step 15, illustrated in **Fig. 1a,** the module MAP maps each component $Y_{Res}$ of the residual frame Res such that the mapping of each pixel $Y_{Res,p}$ of a component $Y_{Res}$ of the residual frame Res depends on the pixel value $Bal_p$ of the decoded version $\widehat{Bal}$ of the backlight frame associated with this pixel **p** (the pixels $Y_{Res,p}$ and the pixel of the decoded backlight frame $\widehat{Bal}$ have the same spatial position).

In the following, for convenience, the pixel value $Bal_p$ stands for either a pixel value of the backlight frame Bal or a pixel value of the decoded version $\widehat{Bal}$ of the backlight frame.

The mapping thus depends on the values of the backlight frame (or the decoded version $\widehat{Bal}$ of the backlight frame). Such a modulation of the mapping by the backlight frame (or the decoded version $\widehat{Bal}$ of the backlight frame) allows a better usage of the mapped space by avoiding useless codewords out of the data range, thus leading to a better representation of the mapped residual frame. As a consequence, better compression performance is reached.

The variant is advantageous because using the decoded version $\widehat{Bal}$ of the backlight frame rather than the backlight frame Bal avoids lossless encoding of the backlight frame which is mandatory to ensure a same modulation of the mapping at both the encoder and decoder sides.

According to an embodiment of the step 15, mapping a component $Y_{Res}$ of the residual frame Res comprises applying a mapping function mf(.) to the pixel values of this component and multiplying the pixel values of the resulting frame Resr by a scaling factor S(.).

Mathematically speaking, let consider a pixel value $Y_{Res,p}$ of a component $Y_{Res}$ of the residual frame Res and its pixel value $Bal_p$ of the backlight frame Bal (or of the decoded version $\widehat{Bal}$ of the backlight frame). The mapped pixel value $Y_{Resm,p}$ of a component of the residual frame Res is given by

$$Y_{Resm,p} = S(.) * mf\left(Y_{Res,p}\right) \qquad (3)$$

According to an embodiment, the mapping function is a gamma function. The resulting (gamma-corrected) residual frame $Res_R$ is then given, for example, by:

$$Resm = A.Res^{\gamma}$$

with A being a constant value, $\gamma$ being a coefficient of a gamma curve equal, for example, to 1/2.4.

According to an embodiment, the mapping function is a S-Log function. The S-Logged residual frame $Res_{SL}$ is given, for example, by:

$$Resm = a.\ln(Res + b) + c$$

with a,b and c being coefficients of a SLog curve determined such that 0 and 1 are invariant, and the derivative of the SLog curve is continuous in 1 when prolonged by a gamma curve below 1. Thus, a,b and c are functions of the parameter $\gamma$.

According to an embodiment, the mapping function mf(.) is either a gamma correction or a SLog correction according to the pixel values of the residual frame.

Applying a gamma correction on the residual frame Res, pulls up the dark regions but does not lower enough high lights to avoid burning of bright pixels. Applying a SLog correction on the residual frame Res lowers enough high lights but does not pull up the dark regions.

Then, according to an embodiment, the module MAP applies either the gamma correction or the SLog correction according to the pixel values of the residual frame Res.

For example, when the pixel value of the residual frame Res is below a threshold (equal to 1), then the gamma correction is applied and otherwise the SLog correction is applied.

By construction, the resulting residual frame Resr usually has a mean value more or less close to 1 depending on the brightness of the frame I, making the use of the above gamma-Slog combination particularly efficient.

According to an embodiment, in step the parameter $\gamma$ of the gamma-Slog curve is encoded in a bitstream F3 by means of an encoder ENC3 and added in a bitstream F3 which may be stored on a local or remote memory and/or transmitted through a communication interface (e.g. to a bus or over a communication network or a broadcast network).

It may be noted that the choice of the parameters $\alpha$, $\gamma$, $\beta$ gives room for the choice of the mapping function which suits the content the best following the taste of an expert in post-production and color grading.

On the other hand, universal parameters may be defined in order to be acceptable for all of a large variety of frames. Then, no parameters are encoded in the bitstream F3.

According to an embodiment of the method, in step 16, a module Mn obtains the scaling factor from the pixel value $Bal_p$ of the backlight frame Bal (or the decoded version $\widehat{Bal}$ of the backlight frame) associated with a pixel p of a component of the residual frame Res and a maximum bound M of the pixel values of the associated component $Y_I$ of the frame I to be encoded. For example, this bound may be provided by the input format of the frame I; the maximum luminance of the format may be fixed to a certain amount of nits, say 10000 nits for instance.

Then, the scaling factor, which depends on both the values $Bal_p$ and the maximum bound M, is thus obtained by:

$$S\left(Bal_p, M\right) = (2^N - 1)/mf\left(M/Bal_p\right)$$

where N is a number of bits which defines the range of the mapped pixel value $Y_{Resm,p}$.

This embodiment is advantageous because it ensures that the pixel values of the mapped residual frame Resm belong to the range $[0, 2^N-1]$ and thus the mapped residual frame Resm may be encoded with an N-bit depth encoder ENC4 (step 18).

According to a variant, in step 16, the module Mn is further configured to obtain a minimum bound **m** of the pixel values of a component $Y_I$ of the frame I to be encoded.

Then, the scaling factor, which further depends on the minimum bound m, is obtained by:

$$S\left(Bal_p, M\right) = (2^N - 1)/\left[mf\left(M/Bal_p\right) - mf\left(m/Bal_p\right)\right]$$

and the mapped pixel value $Y_{Resm,p}$ of a component of the residual frame Res is given by:

$$Y_{Resm,p} = S\left(Bal_p, M\right)x\left[mf\left(Y_{Res,p}\right) - mf\left(m/Bal_p\right)\right] \qquad (2)$$

According to an embodiment, in step 17, an information *Inf* which represents either the maximum bound M or the minimum bound **m** or both is encoded in a bitstream F2 by means of an encoder ENC2 and added in a bitstream F2 which may be stored on a local or remote memory and/or transmitted through a communication interface (e.g. to a bus or over a communication network or a broadcast network).

According to a variant, the information *Inf* is a minimum bound or a maximum bound or both for each pixel of the frame. The information may be carried as it or compressed. For instance, a second backlight $Ba_M$ may carry the information for the maximum bound M such that, for each pixel p, the value M to be taken is $\widehat{Bal_{M,p}}$. Similarly, a third

backlight $Ba_m$ may be used to carry the information of the lower bound m. The information of these extra backlights $Ba_M$ and/or $Ba_m$ can be encoded in the bitstream F2 in a similar way as the backlight Bal is encoded in the stream F1.

In step 18, the mapped residual frame Resr is encoded by means of an encoder ENC4 in a bitstream F4 which may be stored on a local or remote memory and/or transmitted through a communication interface (e.g. on a bus or over a communication network or a broadcast network).

The mapping of the residual frame Resr is a parametric process. The parameters may be fixed or not and in the latter case they may be encoded in the bitstream F2 and F3 as explained before.

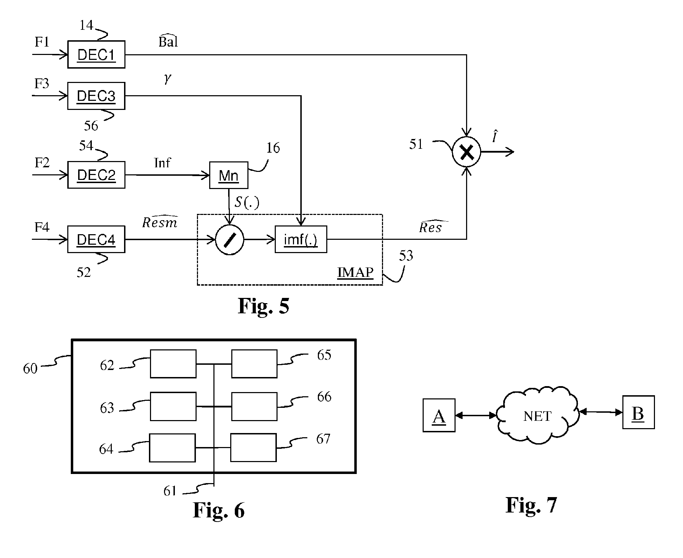

**Fig. 5** shows a block diagram of the steps of a method, in accordance with an embodiment of the disclosure, for decoding a frame from at least one bitstream representing a backlight frame obtained from the frame and a residual frame calculated by dividing the frame by the backlight frame.

As explained above, in step 14, a decoded backlight frame $\widehat{Bal}$ is obtained for example by at least partially decoding a bitstream F1 by means of the decoder DEC1. The bitstream F1 may have been stored locally or received from a communication network.

In step 52, a decoded residual frame $\widehat{Resm}$ is obtained by a at least partial decoding of a bitstream F4 by means of a decoder DEC4. The bitstream F4 may have been stored locally or received from a communication network.

In step 53, a module IMAP unmaps each component $\widehat{Y_{resm}}$ of the decoded residual frame $\widehat{Resm}$ such that the unmapping of each pixel $\widehat{Y_{resm,p}}$ of a component $\widehat{Y_{resm}}$ ' of the decoded residual frame $\widehat{Resm}$ depends on the pixel value $\widehat{Bal_p}$ of the decoded backlight frame $\widehat{Bal}$ associated with this pixel **p.**

Unmapping a component of a frame stands for applying an inverse mapping to this previously mapped component.

According to an embodiment of the step 53, unmapping a component $\widehat{Y_{resm}}$ ( of the decoded residual frame $\widehat{Resm}$ comprises dividing the pixel values of the component $\widehat{Y_{resm}}$ by a scaling factor S(.) and applying a mapping function imf(.) to the pixel values of the resulting component.

Mathematically speaking, the pixel values $\widehat{Y_{Res,p}}$ of a component of the decoded residual frame $\widehat{Res}$, , output of the step 53, is given by:

$$\widehat{Y_{Res,p}} = imf\left(\widehat{Y_{resm,p}} / S(.)\right)$$

where $\widehat{Y_{resm,p}}$ is the value of a pixel p of a component of the decoded residual frame $\widehat{Resm}$. .

In step 16, the scaling factor S(.) is given by the module Mn according to any one of its embodiments or variants described above in relation with the **Fig. 1.**

Thus, according to some embodiments, the scaling factor is obtained from the pixel value $Bal_p$ of the decoded backlight frame associated with a pixel **p** and a maximum bound M of the pixel values of the associated component $Y_l$ of the frame to be decoded.

According to an embodiment, the scaling factor S(.) is obtained from parameters.

According to an embodiment, in step 54, these parameters are obtained from an information *Inf,* obtained by decoding at least partially the bitstream F2 by means of a decoder DEC2. The bitstream F2 may have been stored locally or received from a communication network.

For example, the information *Inf* represents either the maximum bound M or the minimum bound **m** or both as explained before. But the information Inf may also represents other values according to embodiments and variants explained before in relation with the **Fig. 1.**

According to an embodiment, the mapping function imf(.) is a parametric function and the parameters, such as for example the parameter $\gamma$, are obtained, in step 56, by decoding at least partially the bitstream F3 by means of a decoder DEC3. The bitstream F3 may have been stored locally or received from a communication network.

The parameters of the mapping function imf(.) may be the same as those of the mapping function described above in relation with the **Fig. 1.**

In step 51, a decoded frame $\hat{I}$ is obtained by multiplying the decoded residual frame $\widehat{Resm}$ output of the step 53, by the decoded backlight frame $\widehat{Bal}$.

The decoders DEC1-2-3-4 are respectively configured to decode data which have been encoded by the encoders ENC1-2-3-4.

The encoders ENC1-2-3-4 (and decoders DEC1-2-3-4) are not limited to a specific encoder (decoder) but when an entropy encoder (decoder) is required, an entropy encoder such as a Huffmann coder, an arithmetic coder or a context adaptive coder like Cabac used in h264/AVC or HEVC is advantageous.

The encoders ENC1-2-3-4 (and decoders DEC1-2-3-4) are not limited to a specific encoder which may be, for example, an frame/video coder with loss like JPEG, JPEG2000, MPEG2, h264/AVC or HEVC.

The encoders ENC1-2-3-4 may be a same encoder and the decoders DEC1-2-3-4 may be a same decoder.

On **Fig. 1-5,** the modules are functional units, which may or not be in relation with distinguishable physical units. For example, these modules or some of them may be brought together in a unique component or circuit, or contribute to functionalities of a software. *A contrario,* some modules may potentially be composed of separate physical entities. The apparatus which are compatible with the disclosure are implemented using either pure hardware, for example using dedicated hardware such ASIC or FPGA or VLSI, respectively «Application Specific Integrated Circuit », «Field-Programmable Gate Array», «Very Large Scale Integration », or from several integrated electronic components embedded in a device or from a blend of hardware and software components.

**Fig. 6** represents an exemplary architecture of a device 60 which may be configured to implement a method described in relation with **Fig. 1-5.**

Device 60 comprises following elements that are linked together by a data and address bus 61:

- a microprocessor 62 (or CPU), which is, for example, a DSP (or Digital Signal Processor);
- a ROM (or Read Only Memory) 63;
- a RAM (or Random Access Memory) 64;
- an I/O interface 65 for reception of data to transmit, from an application; and
- a battery 66

According to a variant, the battery 66 is external to the device. Each of these elements of **Fig. 6** are well-known by those skilled in the art and won't be disclosed further. In each of mentioned memory, the word « register » used in the specification can correspond to area of small capacity (some bits) or to very large area (e.g. a whole program or large amount of received or decoded data). ROM 63 comprises at least a program and parameters. Algorithm of the methods according to the disclosure is stored in the ROM 63. When switched on, the CPU 62 uploads the program in the RAM and executes the corresponding instructions.

RAM 64 comprises, in a register, the program executed by the CPU 62 and uploaded after switch on of the device 60, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to a specific embodiment of encoding or encoder, the frame I is obtained from a source. For example, the source belongs to a set comprising:

- a local memory (63 or 64), e.g. a video memory or a RAM (or Random Access Memory), a flash memory, a ROM (or Read Only Memory), a hard disk ;
- a storage interface (65), e.g. an interface with a mass storage, a RAM, a flash memory, a ROM, an optical disc or a magnetic support;
- a communication interface (65), e.g. a wireline interface (for example a bus interface, a wide area network interface, a local area network interface) or a wireless interface (such as a IEEE 802.11 interface or a Bluetooth® interface); and

- an frame capturing circuit (e.g. a sensor such as, for example, a CCD (or Charge-Coupled Device) or CMOS (or Complementary Metal-Oxide-Semiconductor)).

According to different embodiments of the decoding or decoder, the decoded frame I is sent to a destination; specifically, the destination belongs to a set comprising:

- a local memory (63 or 64), e.g. a video memory or a RAM, a flash memory, a hard disk ;
- a storage interface (65), e.g. an interface with a mass storage, a RAM, a flash memory, a ROM, an optical disc or a magnetic support;
- a communication interface (65), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, WiFi ® or a Bluetooth ® interface); and
- a display.

According to different embodiments of encoding or encoder, the bitstream BF is sent to a destination. As an example, the bitstream BF is stored in a local or remote memory, e.g. a video memory (64) or a RAM (64), a hard disk (63). In a variant, the bitstream BF is sent to a storage interface (65), e.g. an interface with a mass storage, a flash memory, ROM, an optical disc or a magnetic support and/or transmitted over a communication interface (65), e.g. an interface to a point to point link, a communication bus, a point to multipoint link or a broadcast network.
According to different embodiments of decoding or decoder, the bitstream BF is obtained from a source. Exemplarily, the bitstream is read from a local memory, e.g. a video memory (64), a RAM (64), a ROM (63), a flash memory (63) or a hard disk (63). In a variant, the bitstream is received from a storage interface (65), e.g. an interface with a mass storage, a RAM, a ROM, a flash memory, an optical disc or a magnetic support and/or received from a communication interface (65), e.g. an interface to a point to point link, a bus, a point to multipoint link or a broadcast network.
According to different embodiments, device 60 being configured to implement an encoding method described in relation with **Fig. 1-4,** belongs to a set comprising:

- a mobile device ;
- a communication device ;
- a game device ;
- a tablet (or tablet computer) ;
- a laptop ;
- a still frame camera;
- a video camera ;
- an encoding chip;
- a still frame server; and
- a video server (e.g. a broadcast server, a video-on-demand server or a web server).

According to different embodiments, device 60 being configured to implement a decoding method described in relation with **Fig. 5,** belongs to a set comprising:

- a mobile device ;
- a communication device ;
- a game device ;
- a set top box;
- a TV set;
- a tablet (or tablet computer) ;
- a laptop ;
- a display and
- a decoding chip.

According to an embodiment illustrated in **Fig. 7,** in a transmission context between two remote devices A and B over a communication network NET, the device A comprises means which are configured to implement a method for encoding a frame as described in relation with the **Fig. 1-4** and the device B comprises means which are configured to implement a method for decoding as described in relation with **Fig. 5.**
According to a variant of the disclosure, the network is a broadcast network, adapted to broadcast still frames or video frames from device A to decoding devices including the device B.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. Method for encoding a frame, **characterized in that** it comprises a processor configured for:

   - encoding (12) a backlight frame determined (11) from the frame;
   - obtaining (13) at least one component of a residual frame by dividing each component of the frame by a decoded version of the backlight frame;
   - mapping each component ($Y_{Res}$) of the residual frame (Res) such that the mapping of each pixel ($Y_{Res,p}$) of a component ($Y_{Res}$) of the residual frame Res depends on the pixel value ($Bal_p$) of either the backlight frame (Bal) or a decoded version of the backlight frame $\left(\widehat{Bal}\right)$, associated with this pixel (p); and
   - encoding (18) the mapped residual frame.

2. Device for encoding a frame, **characterized in that** it comprises a processor configured for:

   - encoding (12) a backlight frame determined (11) from the frame;
   - obtaining (13) at least one component of a residual frame by dividing each component of the frame by a decoded version of the backlight frame;
   - mapping each component ($Y_{Res}$) of the residual frame (Res) such that the mapping of each pixel ($Y_{Res,p}$) of a component ($Y_{Res}$) of the residual frame Res depends on the pixel value ($Bal_p$) of either the backlight frame (Bal) or a decoded version of the backlight frame $\left(\widehat{Bal}\right)$, associated with this pixel (**p**); and
   - encoding (18) the mapped residual frame.

3. The method according to the claim 1 or the device according to the claim 2, wherein mapping a component ($Y_{Res}$) of the residual frame (Res) comprises applying a mapping function (mf(.)) to the pixel values of this component and multiplying the pixel values of the resulting frame by a scaling factor.

4. The method or the device according to the claim 3, wherein the processor is further configured for obtaining the scaling factor from the pixel value ($Bal_p$) of either the backlight frame (Bal) or a decoded version of the backlight frame $\left(\widehat{Bal}\right)$, associated with this pixel **(p)** and a maximum bound (M) of the pixel values of the associated component ($Y_I$) of the frame to be encoded.

5. The method or the device according to the claim 4, wherein the scaling factor is obtained also from a minimum bound **(m)** of the pixel values of a component ($Y_I$) of the frame to be encoded.

6. The method or the device according to the claim 4 or 5, wherein the processor is further configured for encoding an information which represents either a maximum bound or a maximum bound and a minimum bound of the pixel values of the frame to be encoded.

7. Method for decoding a frame from at least one bitstream representing a backlight frame obtained from the frame and a residual frame calculated by dividing the frame by the backlight frame, the method comprising a processor configured for:

- obtaining (14) a decoded backlight frame by a at least partially decoding of the bitstream;
- obtaining a decoded residual frame by a at least partially decoding of the bitstream; and
- obtaining (51) a decoded frame by multiplying the decoded residual frame by the decoded backlight frame; and the method is **characterized in that** the processor is further configured, before obtaining the decoded frame, for unmapping each component $\left(\widehat{Y_{resm}}\right)$ of the decoded residual frame $\left(\widehat{Resm}\right)$ such that the unmapping of each pixel $\left(\widehat{Y_{resm,p}}\right)$ of a component $\left(\widehat{Y_{resm}}\right)$ of the decoded residual frame $\left(\widehat{Resm}\right)$ depends on the pixel value $\left(\widehat{Bal_p}\right)$ of the decoded backlight frame $\left(\widehat{Bal}\right)$ associated with this pixel (p).

8. Device for decoding a frame from at least one bitstream representing a backlight frame obtained from the frame and a residual frame calculated by dividing the frame by the backlight frame, **characterized in that** it comprises a processor configured for:

- obtaining (14) a decoded backlight frame by a at least partially decoding of the bitstream;
- obtaining a decoded residual frame by a at least partially decoding of the bitstream; and
- obtaining (51) a decoded frame by multiplying the decoded residual frame by the decoded backlight frame; **characterized in that** the processor is further configured, before obtaining the decoded frame, for unmapping each component $\left(\widehat{Y_{resm}}\right)$ of the decoded residual frame $\left(\widehat{Resm}\right)$ such that the unmapping of each pixel $\left(\widehat{Y_{resm,p}}\right)$ of a component $\left(\widehat{Y_{resm}}\right)$ of the decoded residual frame $\left(\widehat{Resm}\right)$ depends on the pixel value $\left(\widehat{Bal_p}\right)$ of the decoded backlight frame $\left(\widehat{Bal}\right)$ associated with this pixel (p).

9. The method according to the claim 7 or the device according to the claim 8, wherein unmapping a component $\left(\widehat{Y_{resm}}\right)$ of the decoded residual frame $\left(\widehat{Resm}\right)$ comprises dividing the pixel values of the component $\left(\widehat{Y_{resm}}\right)$ by a scaling factor and applying a mapping function (imf(.)) to the pixel values of the resulting component.

10. The method or a device according to the claim 9, wherein the processor is further configured for obtaining the scaling factor from the pixel value ($Bal_p$) of the decoded backlight frame (Bal) associated with this pixel **(p)** and a maximum bound (M) of the pixel values of the associated component ($Y_l$) of the frame to be decoded.

11. The method or the device according to the claim 10, wherein the scaling factor is obtained also from a minimum bound **(m)** of the pixel values of a component ($Y_l$) of the frame to be decoded.

12. The method or device according to the claim 10 or 11, wherein the processor is further configured for obtaining the maximum bound (M) or the maximum bound and the minimum bound from an information (inf) obtained by a at least partially decoding of at least bitstream.

13. The method or device according to the claim 11 or 12, wherein the information is a maximum bound or a maximum bound and a minimum bound for each pixel of the frame.

14. The method according to one of the claims 1, 3-7, 9-13 or the device according to one of the claims 2-6, 8-13, wherein the mapping function is either a gamma function or a S-Log function.

15. A computer program product comprising program code instructions to execute the steps of the encoding method according to one of the claims 1, 3-6 when this program is executed on a computer.

16. A computer program product comprising program code instructions to execute the steps of the decoding method according to one of the claims 7, 9-13 when this program is executed on a computer.

17. A processor readable medium having stored therein instructions for causing a processor to perform at least the steps of the encoding method according to one of the claims 1, 3-6.

18. A processor readable medium having stored therein instructions for causing a processor to perform at least the steps of the decoding method according to one of the claims 7, 9-13.

19. Non-transitory storage medium carrying instructions of program code for executing steps of the method according to one of claims 1, 3-7, 9-13 when said program is executed on a computing device.

**Fig. 1**

Fig. 1a

Fig. 2

Fig. 3

Fig. 4

**Fig. 5**

**Fig. 6**

**Fig. 7**

Europäisches
Patentamt

European
Patent Office

Office européen
des brevets

**EUROPEAN SEARCH REPORT**

Application Number

EP 14 30 5736

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LASSERRE S ET AL: "High Dynamic Range video coding", 16. JCT-VC MEETING; 9-1-2014 - 17-1-2014; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-P0159, 5 January 2014 (2014-01-05), XP030115677, * page 6, paragraph 1 * | 1-19 | INV. H04N19/33 |
| A | David Touzé ET AL: "HDR Video Coding based on Local LDR Quantization", HDRi2014 -Second International Conference and SME Workshop on HDR imaging, 4 March 2014 (2014-03-04), XP055112158, Retrieved from the Internet: URL:http://people.irisa.fr/Ronan.Boitard/articles/2014/HDR Video Coding based on Local LDR Quantization.pdf [retrieved on 2014-04-04] * page 5, left-hand column * | 1-19 | |

TECHNICAL FIELDS
SEARCHED      (IPC)

H04N

The present search report has been drawn up for all claims

| Place of search | Date of completion of the search | Examiner |
|---|---|---|
| Berlin | 29 September 2014 | Raeymaekers, Peter |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Advanced video coding for generic audiovisual Services. *SERIES H: AUDIOVISUAL AND MULTIMEDIA SYSTEMS, Recommendation ITU-T H.264, Telecommunication Standardization Sector of ITU,* January 2012

- High Efficiency Video Coding. *SERIES H: AUDIOVISUAL AND MULTIMEDIA SYSTEMS, Recommendation ITU-T H.265, Telecommunication Standardization Sector of ITU,* April 2013